(19) Europäisches Patentamt
European Patent Office
Office européen des brevets

(11) **EP 4 557 118 A1**

(12) **DEMANDE DE BREVET EUROPEEN**

(43) Date de publication:
**21.05.2025 Bulletin 2025/21**

(21) Numéro de dépôt: **23306988.9**

(22) Date de dépôt: **16.11.2023**

(51) Classification Internationale des Brevets (IPC):
*G06F 16/242* (2019.01)

(52) Classification Coopérative des Brevets (CPC):
**G06F 16/2423**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **ATOS FRANCE**
**95870 Bezons (FR)**

(72) Inventeur: **LECROART, Yannick**
**34280 La Grande Motte (FR)**

(74) Mandataire: **Novagraaf Technologies**
**Bâtiment O2**
**2, rue Sarah Bernhardt**
**CS90017**
**92665 Asnières-sur-Seine Cedex (FR)**

(54) **PROCÉDÉ, DISPOSITIF ET SYSTÈME INFORMATIQUE D'ACCÈS À DES INFORMATIONS STOCKÉES DANS DES TABLES DE DONNÉES**

(57) Le procédé comprend les étapes suivantes, mises en oeuvre par un système informatique, de :
- recevoir (E1), via un agent conversationnel (CBT), une question relative à des informations contenues dans une ou plusieurs tables de données ;
- extraire (E2) un ou des premiers mots clés (KW1) de ladite question ;
- en cas de correspondance (E5) d'au moins undit premier mot clé avec au moins un deuxième mot clé (KW2) stocké en mémoire en association avec un indicateur de performance, obtention (E6) d'une requête de recherche (REQ) dans au moins une table de données, ladite requête de recherche étant associée dans ladite mémoire avec ledit indicateur de performance ;
- exécuter (E7) la requête de recherche dans la au moins une table de données et obtenir (E8) des résultats (RST) de recherche ; et
- générer (E10) via l'agent conversationnel une réponse (RSP) à la question au moins à partir des informations contenues dans les résultats (RST) de recherche.

FIG. 3

EP 4 557 118 A1

**Description**

DOMAINE TECHNIQUE

La présente invention concerne la gestion de tables de données et, notamment l'accès à des informations contenues dans ces tables de données.

En particulier, l'invention s'applique à l'accès par des utilisateurs à des indicateurs de performance à partir des informations contenues dans ces tables de données.

ARRIERE PLAN TECHNOLOGIQUE

Dans le cadre de l'activité d'une entreprise ou plus largement d'une organisation, on désigne par « intelligence décisionnelle » (en anglais, « Business Intelligence » ou BI) la fourniture d'informations pertinentes et fiables destinées à soutenir une prise de décision stratégique. Concrètement, des rapports, par exemple de type tableaux de bord, sont créés, contenant des informations textuelles et chiffrées ainsi qu'un ensemble d'indicateurs ou indicateurs clés de performances (en anglais, « Key Performance Indicator» ou KPI), que l'on représente souvent sous forme graphique, par exemple à l'aide de « camemberts » (en anglais, « pie chart »), de graphiques en lignes (en anglais, « line chart ») ou encore de diagrammes en barre (en anglais, « bar chart »).

Un inconvénient de ces tableaux de bord est qu'ils contiennent une grande quantité d'informations, par exemple organisée selon une multitude d'onglets. Lorsqu'un utilisateur souhaite accéder à une information déterminée dans un tableau de bord, par exemple en lien avec un KPI donné, il doit parcourir chaque onglet pour identifier la partie du document contenant l'information recherchée. Une telle recherche d'information s'avère longue et fastidieuse.

La présente invention vise à améliorer la situation, notamment à permettre un accès facilité et automatisé à une information souhaitée dans un document électronique.

RESUME DE L'INVENTION

Selon un premier aspect, l'invention concerne un procédé mis en oeuvre par ordinateur de gestion d'accès à des tables de données stockées dans un entrepôt de données, comportant les étapes, mises en oeuvre par un système informatique, de :

- recevoir, via un agent conversationnel, une question relative à des informations contenues dans une ou plusieurs desdites tables de données ;
- extraire un ou des premiers mots clés de ladite question ;
- en cas de correspondance d'au moins undit premier mot clé avec au moins un deuxième mot clé stocké en mémoire en association avec un indicateur de performance, obtention d'une requête de recherche dans au moins une table de données, ladite requête de recherche étant associée dans ladite mémoire avec ledit indicateur de performance ;
- exécuter la requête de recherche dans la au moins une table de données et obtenir (E8) des résultats de recherche ;
- générer via l'agent conversationnel une réponse à la question au moins à partir des informations contenues dans les résultats de recherche.

La présente invention permet d'interagir avec un agent conversationnel pour accéder automatiquement et facilement aux informations relatives à un indicateur de performances donné, en interrogeant une ou plusieurs tables de données et sans avoir à consulter manuellement un rapport de données produit à partir des tables de données et comprenant ledit indicateur de performances.

Un avantage est d'améliorer l'expérience utilisateur en lui faisant économiser temps et effort.

L'invention s'applique à tout type d'informations et de rapport. Elle est particulièrement adaptée pour l'accès à des informations d'intelligence décisionnelle.

Dans un mode de réalisation, le procédé comprend en outre les étapes de comparer le ou lesdits premiers mots clés avec des deuxièmes mots clés stockés dans ladite mémoire et de décider de la correspondance en fonction d'une distance déterminée entre ledit au moins un premier mot clé et ledit au moins un deuxième mot clé.

Par exemple, il est décidé que les premiers et deuxièmes mots clés correspondent lorsque la distance déterminée est inférieure à un seuil donné.

Selon un mode de réalisation, le procédé comprend en outre l'étape d'obtenir des informations relatives à un type de représentation graphique associé audit indicateur de performance, la réponse à la question étant générée en prenant en compte lesdites informations obtenues.

Par exemple, lorsque la question s'y prête, la réponse est enrichie d'une représentation graphique de l'indicateur de performance concerné. Un avantage est de fournir une réponse plus facile. Par exemple, le type de graphe indiqué correspond à celui contenu dans le tableau de bord comprenant l'indicateur de performance. Un avantage est de fournir à l'utilisateur une réponse conforme au contenu du tableau de bord.

Selon un mode de réalisation, le procédé comporte une étape de lire un fichier informatique de gouvernance, stocké en mémoire, décrivant la ou les tables de données et des paramètres opérationnels de contrôle d'opérations exécutées lors de la mise en oeuvre desdites étapes.

Le fichier de gouvernance permet de spécifier des outils, tels que des logiciels ou applications ou algorithmes, et/ou des paramètres que le procédé doit utiliser pour s'exécuter. Le contenu du fichier peut être modifié, ce qui permet de faire évoluer le système qui exécute le procédé sans modification d'un code source pour l'exécution des tâches de ce système.

Le fait de regrouper toutes ces informations dans un même fichier de données qui est lu avant de traiter une question reçue via l'agent conversationnel permet de garantir que le procédé dispose d'informations fiables et à jour pour s'exécuter.

Selon un mode de réalisation, le fichier informatique de gouvernance, stocké en mémoire, décrit en outre un ou plusieurs indicateurs clés de performance et stocke le ou les deuxièmes mots clés et la requête de recherche en association avec undit indicateur de performance.

Par exemple, l'indicateur de performance est un nombre de collaborateurs dans une entreprise, une évolution sur une période temporelle donnée d'une consommation de données mobiles par les collaborateurs de l'entreprise ou encore une répartition par types de terminaux mobiles des terminaux mobiles utilisés par les collaborateurs de cette entreprise.

Selon un ou plusieurs autres modes de réalisation, le fichier informatique de gouvernance indique pour un indicateur de performance donné une information relative à un type de graphe à utiliser pour représenter les informations d'intelligence décisionnelle qui s'y rapportent (par exemple un camembert, un graphique en lignes etc.) associées à l'indicateur de performance donné.

Selon un autre mode de réalisation, le procédé comprend les étapes de :

- obtenir via l'agent conversationnel une validation ou invalidation de la réponse générée et,
- en cas de rejet, obtenir via l'agent conversationnel une validation ou une invalidation du ou des premiers mots clés,
- en cas de validation du ou des premiers mots clés, mettre à disposition un rapport d'erreur.

Lorsque les mots clés extraits correspondent bien à ceux souhaités par un utilisateur qui a interrogé l'agent conversationnel, mais que l'utilisateur a invalidé la réponse qu'il a reçue, cela signifie qu'une défaillance existe au niveau du processus de gestion de la recherche dans les documents électroniques de la base de données. Dans ce cas, la mise à disposition (par exemple le stockage et/ou la transmission) d'un rapport d'erreur décrivant les échanges entre l'utilisateur et la plateforme va permettre à des analystes et ou des experts en développement informatique de mettre en place une action corrective.

De la sorte, on assure une amélioration continue du système.

Selon un mode de réalisation, en cas d'invalidation du ou des premiers mots clés, le procédé comprend l'étape d':

- obtenir un ou des troisièmes mots-clés via l'agent conversationnel et exécuter une nouvelle itération des étapes du procédé.

Cette nouvelle itération du procédé va permettre de générer une nouvelle réponse à partir des troisièmes mots clés, souhaités par l'utilisateur.

Selon un mode réalisation, le procédé comprend, en cas de validation de la réponse, l'étape de mise à jour des deuxièmes mots clés stockés en mémoire, par ajout des premiers mots clés extraits de la question qui ne correspondent pas à des deuxièmes mots clés déjà stockés en mémoire.

Ainsi les mots clés choisis par un utilisateur sont ajoutés à ceux déjà stockés en association avec l'indicateur de performance recherché. Un avantage est de mettre à jour les deuxièmes mots clés stockés en mémoire pour l'indicateur de performance, par exemple dans le fichier de gouvernance, ce qui contribue à l'enrichir et donc à améliorer la qualité des futures réponses.

Ils pourront ainsi être exploités lors d'une prochaine interaction avec l'utilisateur ou un autre utilisateur.

Selon un mode de réalisation, ledit procédé comprenant une étape de transcrire, via un agent d'intelligence artificielle générative, le ou les premiers mots clés extraits de la question, qui sont relatifs à une information temporelle, comprenant des dates ou périodes temporelles conformes à un format donné, avant d'exécuter l'étape d'obtenir la requête de recherche.

Ceci permet de rendre une question textuelle d'un utilisateur comportant une donnée temporelle conforme au format des requêtes de recherche stockées en mémoire.

L'utilisation d'un agent conversationnel combiné à un agent d'IA générative permet ici de faciliter l'accès à des informations souhaitées dans l'entrepôt de données.

Selon un deuxième aspect, il est proposé un dispositif de gestion d'un accès à des documents électroniques, comprenant des moyens, mis en oeuvre par ordinateur, pour :

- recevoir, via un agent conversationnel, une question relative à des informations contenues dans une ou plusieurs desdites tables de données ;
- extraire un ou des premiers mots clés de ladite question ;
- en cas de correspondance d'au moins undit premier mot clé avec au moins un deuxième mot clé stocké en mémoire en association avec un indicateur de performance, obtenir une requête de recherche dans au moins une table de données, ladite requête de recherche étant associée dans ladite mémoire avec ledit indicateur de performance;
- exécuter la requête de recherche dans la au moins une table de données et obtenir des résultats de recherche ;
- générer via l'agent conversationnel une réponse à la question au moins à partir des informations contenues dans les résultats de recherche.

Selon un ou plusieurs exemples de réalisation, le dispositif comprend :

- au moins un processeur ; et
- au moins une mémoire comprenant un code de programme informatique, la au moins une mémoire et le code de programme informatique étant configurés pour, avec l'au moins un processeur, provoquer l'exécution dudit dispositif.

Selon un ou plusieurs exemples de mise en oeuvre, le dispositif précité est configuré pour mettre en oeuvre le procédé selon le premier aspect, dans ses différents modes de réalisation.

Corrélativement, selon un ou plusieurs exemples de réalisation, le dispositif précité est intégré dans un système informatique de gestion de tables de données comprenant en outre :

- un entrepôt de données comprenant lesdites tables de données ;
- une mémoire comprenant un fichier informatique de gouvernance décrivant les tables de données et des paramètres opérationnels de contrôle d'opérations exécutées par ledit dispositif,
- un processeur sur lequel un agent conversationnel est installé.

L'invention concerne aussi un produit programme d'ordinateur comportant des instructions pour l'exécution du procédé précité.

L'invention concerne enfin un support d'enregistrement non volatile, lisible par un ordinateur, sur lequel est enregistré le programme d'ordinateur précité.

Bien sûr les modes de réalisations qui viennent d'être présentés peuvent être combinés entre eux.

BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.

La figure 1 représente une vue schématique globale d'un système de gestion d'accès à des informations contenues dans des tables de données, selon un mode de réalisation particulier.

La figure 2 représente un exemple de fichier informatique de gouvernance.

La figure 3 représente un organigramme d'étapes d'un procédé d'accès à des informations contenues dans des tables de données, correspondant à un fonctionnement du système de la figure 1, selon un mode de réalisation de l'invention.

La figure 4 représente un organigramme d'étapes supplémentaires du procédé pour valider une réponse transmise à un utilisateur, selon un autre mode de réalisation.

La figure 5 présente schématiquement un exemple de structure matérielle d'un dispositif d'accès à des informations contenues dans les tables de données, selon un mode de réalisation.

DESCRIPTION DETAILLEE

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

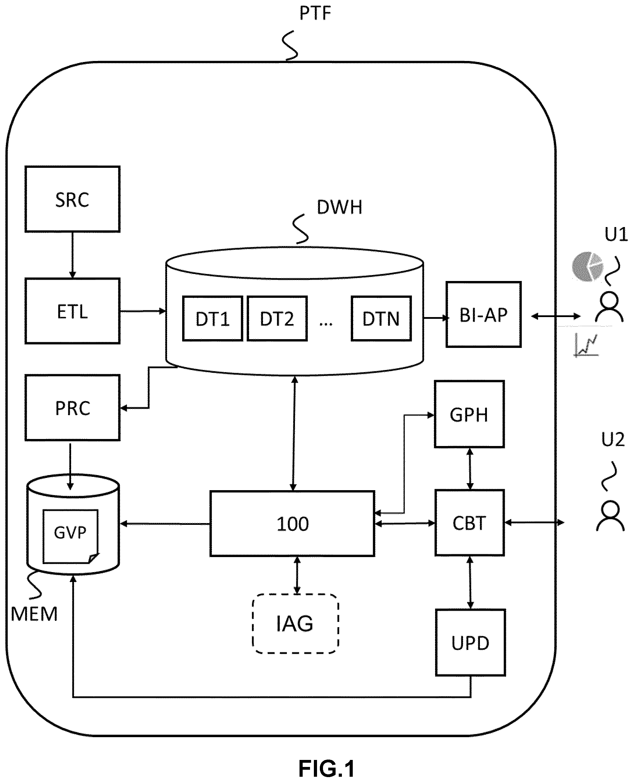

La figure 1 représente une architecture globale d'un système PTF de gestion d'un ensemble de tables de données TB1, TB2, ...TBN, avec N entier non nul, comprenant des informations relatives à une organisation humaine, par exemple des informations relatives à une activité de cette organisation. Le système PTF comporte plusieurs composants qui interagissent entre eux pour permettre une gestion de ces tables de données, notamment un accès à des informations qu'elles contiennent.

Le système, ou plateforme, PTF, comporte un entrepôt de données (en anglais, « Datawarehouse ») DWH, par une base de données relationnelle, dans lequel sont stockées les tables de données TB1 à TBN.

Le système PTF comporte aussi un module ETL (de l'anglais « Extract - Transform - Load ») configuré pour accéder à des données sources contenues dans un ou plusieurs fichiers source, par exemple des documents électroniques comprenant du texte, des images et/ou tout autre type de données, provenant d'une ou plusieurs sources SRC et exécuter un traitement d'extraction, optionnellement (en fonction du cas d'usage) un ou plusieurs traitements de transformation, et un traitement de chargement pour charger des données dans les tables de données TB1 à TBN de l'entrepôt de données décisionnelles DWH.

Par exemple les traitements effectués par le module ETL peuvent inclure un nettoyage des données source pour éliminer des erreurs, incohérences ou doublons, et un transcodage des données pour les rendre compatibles avec un référentiel connu de la plateforme PTF.

Les traitements réalisés par le module ETL (ou d'autres modules d'une chaîne de traitements non représentée) peuvent inclure des transformations sur les données, par exemple une modification de format, de structure, de type ou de contenu des données pour rendre les données compatibles avec la structure de l'entrepôt de données DWH. Ces transformations peuvent par exemple impliquer des opérations de conversion, agrégation, normalisation, dénormalisation, calcul ou une création de nouvelles variables. L'agrégation de données permet d'obtenir des résultats statistiques, tels que des totaux, des moyennes, etc.

Les traitements réalisés par le module ETL peuvent comprendre également un enrichissement des données issues des sources de données à l'aides d'informations supplémentaires, par exemple de nature géographique, démographique, etc. En outre, l'ajout de données historiques, par exemple dans des champs d'informations temporelles associés aux enregistrements ou en utilisant des tables de faits et de dimensions, permet notamment l'analyse de tendances temporelles.

Une fois traitées par le module ETL, les données sont utilisées pour générer des tables de données prêtes à être utilisées pour la prise de décision et l'analyse dans le cadre des activités de l'entreprise. Pour ce faire, elles sont construites conformément à un schéma de base de données, défini en fonction des besoins de l'entreprise, qui décrit les tables, les relations entre les tables de données, les clés primaires et étrangères, ainsi que d'autres contraintes d'intégrité sur les données qu'elles contiennent. Ainsi, les tables de données TB1 à TBN présentent la structure requise pour permettre la consultation et l'analyse des données qu'elles contiennent.

L'entrepôt de données décisionnelles DWH est optimisé pour l'analyse des données. Il peut être requêté par un utilisateur ou un analyste U1, par exemple par l'intermédiaire d'un outil d'analyse et de visualisation de données, par exemple une application BI-AP permettant de générer un rapport de type tableau de bord à partir des données stockées dans les tables de données. Typiquement, un tel tableau de bord comprend des informations d'intelligence décisionnelle, telles que des indicateurs clés de performance ou KPIs.

Dans un exemple d'application, le système PTF est une plateforme d'intelligence décisionnelle utilisée par une entreprise pour gérer une flotte de téléphones mobiles pour ses collaborateurs, les téléphones mobiles étant opérés par un opérateur fournisseur de services de télécommunications. Par exemple, les données source contiennent des données provenant de l'opérateur (par exemple des données de consommation et de facturation), des données RH provenant de l'entreprise (par exemple des données relatives à la structure organisationnelle de l'entreprise et à ses collaborateurs), des données achats provenant également de l'entreprise (par exemple un catalogue des téléphones mobiles utilisés dans l'entreprise). Un analyste de l'entreprise peut requêter la plateforme d'intelligence décisionnelle via l'application BI-APP pour obtenir des rapports utilisés pour la gestion de la flotte de téléphones mobiles. La plateforme d'intelligence décisionnelle peut appartenir à l'entreprise et être hébergée sur site ou, en alternative, être hébergée dans des infrastructures publiques sur internet (cloud en anglais).

Le système PTF comprend également des moyens d'interface utilisateur, non représentés, permettant à un utilisateur U1, par exemple un analyste, d'obtenir des rapports de type tableau de bord.

Le système PTF comprend également un agent conversationnel CBT (« chatbot » en anglais), configurer pour dialoguer en langage naturel avec un utilisateur U2 via les mêmes ou d'autres moyens d'interface. A titre d'exemple illustratif et non limitatif, l'agent conversationnel a été développé sur une plateforme open source Rasa permettant le développement d'agents conversationnels et d'assistants virtuels en Python. L'agent conversationnel CBT utilise un modèle d'intelligence artificielle par apprentissage profond (en anglais, « deep learning »), par exemple de type réseau de neurones profonds, tel qu'un réseau de neurones récurrents (RNN) ou un réseau de neurones récurrents à mémoire à court terme LSTM (en anglais, « Long Short Term Memory »). Ce modèle est composé de couches de neurones interconnectées dont les paramètres internes sont appris à partir des données d'entraînement. Ce dernier apprend, à partir de données d'entraînement, à générer des réponses à des questions d'un utilisateur, en fonction du contexte. Les données d'entraînement peuvent inclure des conversations passées, des bases de données de questions-réponses, ou d'autres sources de texte pertinent. Plus les données sont variées et de qualité, meilleures seront les performances de l'agent conversationnel. Ce sont généralement des données brutes, souvent bruitées, qui nécessitent d'être nettoyées. Un prétraitement comprend la suppression de caractères spéciaux, la mise en minuscules, la « tokenisation » (division du texte en mots ou en unités plus petites), et la gestion de la ponctuation. Lors de l'entraînement, les paramètres internes du modèle sont appris à partir des données d'entraînement (les données prétraitées). Notamment, le modèle apprend à prédire une prochaine séquence de mots ou de « tokens » en fonction d'une séquence précédente d'une conversation.

Il convient de noter que l'agent conversationnel CBT est entraîné de sorte à réaliser une tâche spécifique, par exemple répondre à des questions et/ou fournir des informations. Un agent conversationnel nécessite une interface utilisateur, par exemple une application mobile, un site web, ou une interface de messagerie. Les utilisateurs interagissent avec l'agent conversationnel via cette interface.

Une fois entraîné, l'agent conversationnel CBT répond à une question d'un utilisateur en utilisant le modèle de réseau de neurones. Il est capable d'extraire de la question de l'utilisateur une requête à présenter en entrée du modèle d'IA et de reformuler une réponse appropriée à partir de la sortie obtenue.

A des fins d'amélioration continue, l'agent conversationnel CBT est évalué sur la base des retours des utilisateurs. La prise en compte de ces retours d'expérience utilisateur peut inclure l'ajout de nouvelles données d'entraînement, des mises à jour du modèle, et des ajustements de l'interface utilisateur.

A cet effet, selon un ou plusieurs exemples, le système PTF comprend un agent de mise à jour UPD configuré pour mettre en oeuvre ces mises à jour de l'agent conversationnel CBT et plus généralement des données stockées en mémoire pour le fonctionnement du système PTF.

Le système PTF comprend en outre un dispositif 100 de gestion d'un accès à des informations contenues dans les tables de données de l'entrepôt de données comprenant des moyens de recevoir, via l'agent conversationnel CBT, une question relative à des informations contenues dans un ou plusieurs desdites tables de données, extraire un ou des premiers mots clés KW1 de ladite question ; en cas de correspondance d'au moins undit premier mot clé avec au moins un deuxième mot clé KW2 stocké en mémoire en association avec un indicateur clé de performance KPI, obtenir une requête de recherche REQ dans les tables de données, ladite requête de recherche étant associée dans ladite mémoire avec ledit KPI ; exécuter la requête de recherche dans la ou lesdites tables de données et obtenir des résultats de recherche, générer via l'agent conversationnel une réponse à la question au moins à partir des informations contenues dans les résultats de recherche.

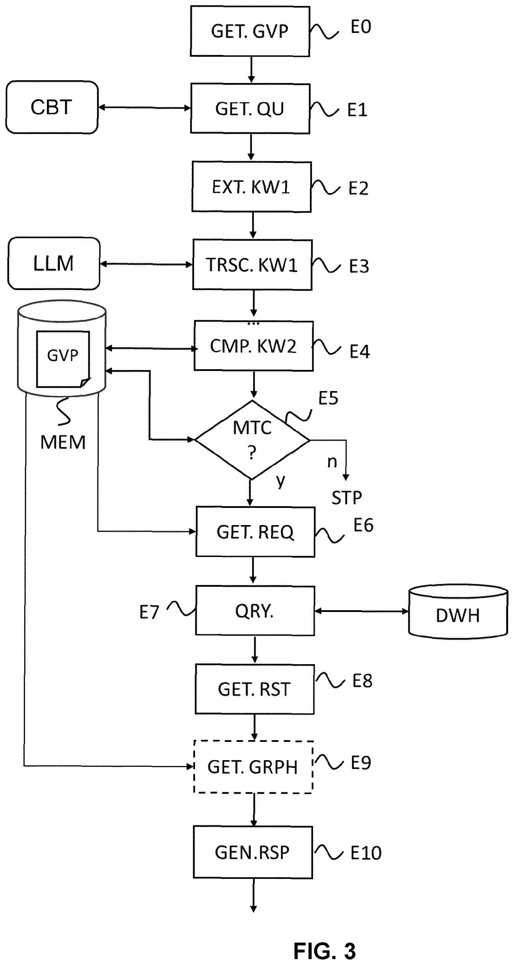

Selon un ou plusieurs exemples, le dispositif 100 met en oeuvre un procédé d'accès à des informations contenues dans une ou des tables de données stockées dans un entrepôt de données, qui va être décrit ci-après en relation avec la FIG. 3.

Le dispositif 100 peut utiliser un outil logiciel d'extraction automatique de mots clés (non représenté) pour extraire le ou les mots clés contenus dans la question posée par un utilisateur U2 via l'agent conversationnel CBT.

Selon un ou plusieurs exemples, et optionnellement, le système PTF comprend en outre un agent ou système d'intelligence artificielle générative, ou d'IA générative IAG, qui s'appuie par exemple sur un grand modèle de langage (de l'anglais, « Large Language Model »), et a pour fonction de transcrire ou convertir des mots clés extraits de la question de l'utilisateur U2, relatifs à une date ou à une période temporelle, dans un format adapté à une requête dans les tables de l'entrepôt de données DWH.

Un module central de contrôle, non représenté, comportant un ou plusieurs processeurs, permet de contrôler le fonctionnement des différents éléments du système PTF.

Le système PTF est implémenté par des moyens hardware (matériel) et des moyens software (logiciel). Les moyens hardware peuvent comprendre un ou plusieurs processeurs. Les moyens software peuvent comprendre des applications, logiciels, programmes d'ordinateur, et/ou un ensemble d'instructions de programme et de données.

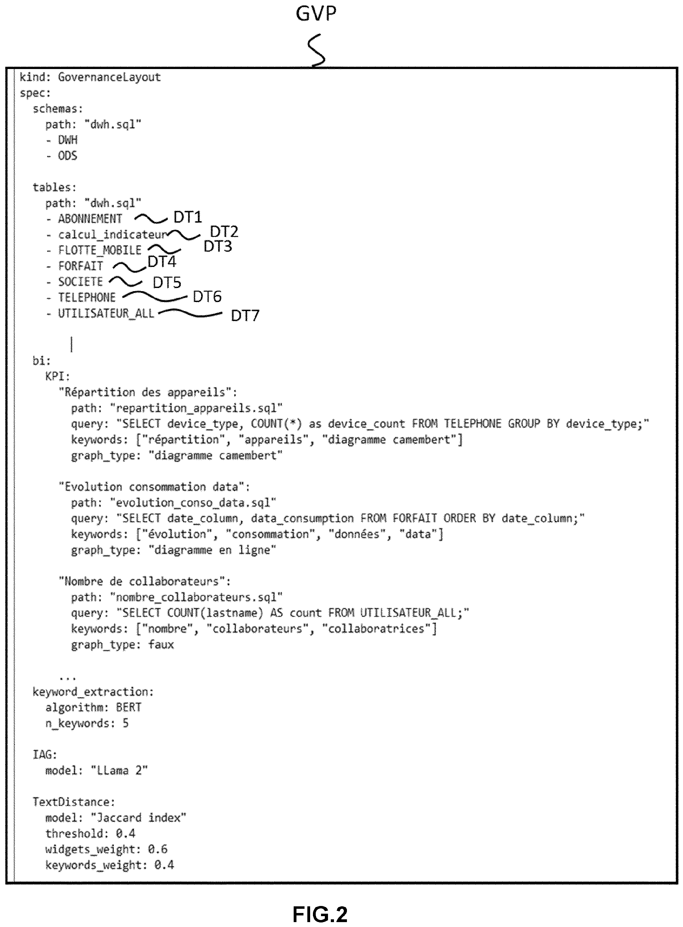

Dans un mode de réalisation particulier, le système PTF peut également comprendre un fichier informatique de gouvernance et/ou de paramétrage GVP, stocké en mémoire MEM. Ce fichier informatique peut être un fichier déclaratif, par exemple de type CSV, YAML, XML ou autre. Un exemple purement illustratif de fichier de gouvernance GVP est présenté sur la FIG. 2. Il contient des informations de désignation et/ou de description des tables de données TB1 à TBN, dans l'exemple de la FIG. 2, TB1 à TB7, stockées dans l'entrepôt de données DWH, par exemple en indiquant un nom de table pour chaque table de données et un chemin pour y accéder. Il décrit également des paramètres opérationnels de contrôle d'opérations du système PTF, destinés à être utilisés par des entités du système PTF, et notamment le dispositif 100, pour exécuter diverses opérations.

A titre d'exemple illustratif et non limitatif, le fichier de gouvernance GVP spécifie :

- un outil logiciel d'extraction de mots clés. Il s'agit par exemple de l'algorithme BERT, basé sur un modèle d'intelligence artificielle de type apprentissage profond (en anglais, « deep learning ») pré-entraîné, développé par GoogleAI®, capable de résoudre plusieurs problématiques de traitement automatique du langage ou NLP (de l'anglais, « Natural Language Processing »). Selon un ou plusieurs modes de réalisation, un nombre de mots clés à extraire d'une question d'un utilisateur est spécifié. A titre d'exemple purement illustratif, il est, dans la FIG. 2, choisi égal à 3 ;
- un modèle de LLM utilisé par l'agent d'intelligence générative IAG, par exemple le modèle open source Llama 2 de Meta® ;
- des paramètres opérationnels relatifs à la génération d'un tableau de bord d'intelligence décisionnelle à partir des données contenues dans les tables de données TB1 à TBN. Ils comprennent notamment, pour chaque indicateur de performances KPI du tableau de bord, un nom associé à ce KPI, une requête de recherche dans la ou les tables de données, des mots clés et optionnellement un type de représentation graphique associés, et
- des paramètres opérationnels destinés à être utilisés par le dispositif 100 dans un ou plusieurs modes de réalisation pour mettre en correspondance des premiers mots clés extraits de la question d'un utilisateur reçue via l'agent conversationnel CBT et des deuxièmes mots clés stockés en mémoire. Il s'agit par exemple d'une mesure de distance, telle que l'index de Jaccard, un seuil de distance, un premier poids associé au KPI et un deuxième poids associé aux mots clés. Un exemple de mise en oeuvre de ces paramètres opérationnels sera détaillé ci-après en relation avec la FIG. 3.

En fonctionnement, chaque élément du système PTF et, en particulier le dispositif 100, peut accéder au fichier GVP et y lire des paramètres opérationnels de contrôle d'opérations ou de tâches à mettre en oeuvre.

Le fichier GVP est modifiable, ce qui permet de faire évoluer les outils et/ou paramètres opérationnels du système PTF et en particulier du dispositif 100, sans qu'il soit nécessaire de modifier un code source permettant l'exécution de tâches et opérations par le système PTF.

Le module central de contrôle (non représenté) est agencé pour contrôler le fonctionnement du système PTF. Il peut comprendre un orchestrateur de tâches destiné à ordonnancer les tâches exécutées par le système PTF.

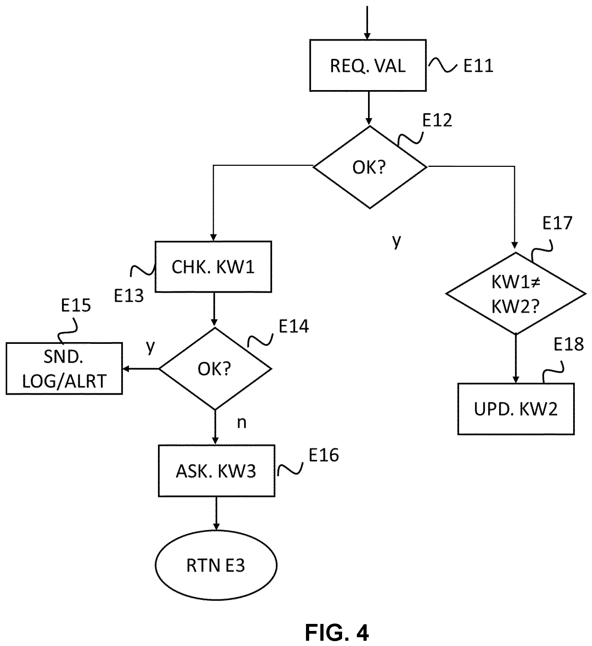

On va maintenant décrire un procédé de gestion d'un accès à des informations contenues dans des tables de données stockées dans l'entrepôt de données DWH du système PTF, correspondant au fonctionnement du dispositif 100, selon un ou plusieurs modes de réalisation et en référence aux FIGs 3 et 4. Les tables de données DT1 à DTN stockent par exemple des documents électroniques (non représentés) comprenant du texte, des images et/ou tout autre type de données.

En ce qui concerne les images, leurs données binaires ne sont généralement pas stockées directement dans les colonnes d'une table de données d'une base de données relationnelle telle que l'entrepôt de données DWH. A la place, il est recommandé d'adopter une des deux approches suivantes :

- stocker des références à ces images, telles que des chemins d'accès, par exemple de type URL (en anglais, « Uniform Resource Locator »), ce qui permet d'éviter de surcharger la base de données avec des données binaires volumineuses, ou
- utiliser un type de données approprié tel que 'BLOB' (Binary Large Object) ou 'VARBINARY'. Un inconvénient est d'augmenter considérablement la taille de la base de données avec des conséquences négatives sur les performances pour de grandes quantités de données.

Lors d'une étape E0, le fichier informatique de gouvernance GVP est lu, ce qui permet au dispositif 100 d'obtenir la dernière version des paramètres opérationnels qu'il stocke.

Lors d'une étape E1, une question QU est reçue via l'agent conversationnel CBT et les moyens d'interface, en provenance d'un utilisateur. Il s'agit typiquement d'une phrase interrogative formulée en langage naturel. A titre d'exemple illustratif, la question QU peut être « Quel est le volume de données utilisé le mois dernier par la flotte mobile ? ».

Lors d'une étape E2, un ou plusieurs premiers mots clés KW1 sont extraits de la question QU. Selon un ou plusieurs modes de réalisation, cette extraction, commandée par le dispositif 100, est exécutée par un outil d'extraction de mots clés, par exemple celui spécifié dans le fichier informatique de gouvernance GVP. Si possible, le nombre de mots clés extraits correspond à celui (nb_keywords = 5) spécifié dans le fichier GVP. Si on reprend l'exemple de la question précédente, les premiers mots clés KW1 extraits sont :

    1. Volume,
    2. Données,
    3. Utilisé,
    4. Mois dernier,
    5. Flotte mobile.

Optionnellement, lors d'une étape E3, les premiers mots clés extraits sont présentés à un agent d'intelligence générative, par exemple l'agent IAG de la FIG. 1, configuré pour identifier celui ou ceux qui concernent une date ou une période temporelle et, si besoin, les transcrire dans un format donné. Si on reprend l'exemple précédent, le quatrième mot clé extrait comprend l'expression « mois dernier ». L'agent d'intelligence générative IAG du système PTF identifie que ce premier mot clé désigne une période temporelle exprimée en langage naturel. L'agent d'intelligence générative IAG est configuré pour formuler une question (en anglais, « prompt ») à présenter au grand modèle de langage LLM, par exemple comme suit : « Le ou lesquels de ces mots clés renvoient à une date ou une période temporelle ? Ne renvoie que le mot clé en réponse, sans commentaire », suivie de la liste précédente de premiers mots clés. On suppose qu'il obtient « mois dernier ». Ensuite, il remplace cette expression textuelle par l'expression chiffrée correspondante de la période concernée : 1/10/2023-31/10.2023 selon un format conforme à celui attendu pour requêter les tables de données de l'entrepôt de données DWH, par exemple en appliquant une règle de formatage prédéterminée.

Lors d'une étape E4, les premiers mots clés KW1 sont comparés à un ou plusieurs deuxièmes mots clés KW2 stockés en mémoire. Selon un ou plusieurs modes de réalisation, ces deuxièmes mots clés KW2 sont stockés dans le fichier informatique de gouvernance GVP, en association avec un ou plusieurs indicateurs clés de performance KPI.

Selon un ou plusieurs modes de réalisation, cette comparaison comprend dans un premier temps la détermination d'une distance entre les premiers et les deuxièmes mots clés. Selon un ou plusieurs exemples, une distance entre les premiers mots clés et les deuxièmes mots clés associés à chaque indicateur clé de performance KPI spécifié dans le fichier GVP est déterminée.

A titre d'exemples non limitatifs, on peut utiliser une des mesures de distance suivantes, connues en soi :

- L'index de Jaccard,
- La Distance Euclidienne,
- La Similarité Cosinus.

Par exemple, l'index de Jaccard est un indicateur couramment utilisé de la distance ou similarité entre deux ensembles. Si U est un ensemble et que A et B sont des sous-ensembles de U, l'indice de Jaccard J(A,B) est défini comme le rapport entre le nombre d'éléments de leur intersection et le nombre d'éléments de leur union :

$$J(A,B)=|A \cap B|/|A \cup B|$$

Cette valeur est de 0 lorsque les deux ensembles sont disjoints, de 1 lorsqu'ils sont égaux, et strictement comprise entre 0 et 1 dans les autres cas. Deux ensembles sont plus similaires (c'est-à-dire qu'ils ont relativement plus de membres en commun) lorsque leur indice de Jaccard est plus proche de 1.

Selon un ou plusieurs modes de réalisation, on désigne par :

$N_{KPI}$ le nombre de deuxièmes mots-clés associés à un KPI donné.
$N_T$ le nombre total de deuxièmes mots-clés.
$S_{KPI}$ la somme des distances entre tous les premiers mots-clés avec les deuxièmes mots clés associé à un KPI donné.
$S_T$ la somme des distances pour tous les mots-clés avec les deuxièmes mots clés de tous les KPIs.
$C_1$ un poids applicable à la somme SKPI. Dans l'exemple de la FIG. 2, il est égal à 0.6.
$C_2$ un poids applicable à la somme ST. Dans l'exemple de la FIG. 2, il est égal à 0.4.

On calcule, pour chaque indicateur clé de performance KPI, un score pondéré de la façon suivante :

$$Sc(KPI) = \frac{C_1.S_{KPI}+C_2.S_T}{N_{KPI}+N_T}$$

Le score obtenu prend donc en compte non seulement les distances entre les premiers mots clés issus de la question de l'utilisateur et les deuxièmes mots clés associés à un KPI donné et les distances entre ces premiers mots clés et la totalité des deuxième mots clé. Un avantage de cette formule mathématique est qu'elle est simple et rapide à calculer, avec un faible risque d'erreur.

Dans un second temps, la plus petite valeur de score est choisie puis comparée à un seuil donné, par exemple spécifié dans le fichier GVP (threshold :0.4). Si elle excède ce seuil, il est décidé en E5 d'une absence de correspondance entre les premiers et deuxièmes mots clés et il est répondu à l'utilisateur via l'agent conversationnel CBT que l'information demandée n'a pas été trouvée ou que celle-ci n'est pas disponible au sein du tableau de bord. Au contraire, dans le cas où le plus petit score calculé ne dépasse pas le seuil, l'indice clé de performance KPI correspondant est choisi et on passe à l'étape suivante (E6).

En E6, une requête REQ de recherche dans les tables de données de l'entrepôt de données est obtenue. Selon un ou plusieurs modes de réalisation, elle est stockée en mémoire avec les deuxièmes mots clés déterminés comme les plus proches des premiers mots clés extraits de la question QU. Ces deuxièmes mots clés sont euxmêmes associés à un indicateur de performance KPI donné. Selon l'exemple précédemment décrit, la requête REQ obtenue est celle associée au KPI pour lequel le score Sc le plus faible a été obtenu.

Si on reprend l'exemple de question précédent (« Quel est le volume de données utilisé le mois dernier par la flotte mobile ? », le KPI qui obtient le meilleur score Sc est le KPI intitulé « Evolution consommation data » et la requête REQ associée est la suivante : "SELECT date_column, data_consumption FROM forfait ORDER BY date_column;"

On voit que la requête REQ spécifie la table de données visée. Dans l'exemple précédent, il s'agit de la table de données « forfait ».

Lors d'une étape E7, la requête est exécutée auprès de la table de données spécifiée par exemple par un agent d'exécution, via l'orchestrateur de tâches du système PTF. En retour, des résultats RST sont obtenus en E8. Typiquement, ils comprennent des données textuelles et ou chiffrées. Dans l'exemple précédent, les résultats comprennent une suite de dates et de nombres associés à chacune de ces dates, le nombre correspondant à une valeur de consommation de données mobiles. Il convient de noter qu'une réponse à une requête dans une base de données comprend des données brutes.

Optionnellement, en E9, il est déterminé si une représentation graphique des résultats obtenus doit être ajoutée. Selon un ou plusieurs modes de réalisation, cette détermination s'appuie sur des informations stockées en mémoire. Selon un mode de réalisation particulier, le fichier de gouvernance GVP indique pour le KPI concerné si l'ajout d'une représentation graphique des résultats RST est adapté et, dans l'affirmative, quel type de graphe utiliser. Dans l'exemple précédent, pour le KPI « Evolution consommation data », il s'agit d'un graphe en lignes en anglais, « line chart »).

Un graphe du type spécifié est alors construit à partir des données RST et le graphe obtenu est transmis en E10 à l'agent conversationnel CBT, à la place des données RST, pour qu'il génère une réponse RSP à la question QU de l'utilisateur. Cette réponse est formulée en langage naturel. Si on reprend l'exemple précédent, elle pourrait prendre la forme suivante : « Voici la réponse à la question que vous m'avez posée : », avec ensuite une restitution du graphique en ligne présentant l'évolution de la consommation de données mobiles pendant le mois dernier.

Bien sûr, d'autres types de graphe peuvent être utilisés. Par exemple, en réponse à une question du type « Montre-moi la répartition des types d'appareils dans la flotte mobile », le KPI concerne est le KPI intitulé « Répartition des appareils », pour lequel le fichier de gouvernance GVP spécifie un graphe de type « camembert » (en anglais, « pie chart »).

A cet égard, il convient de noter qu'une représentation graphique n'est pas toujours adaptée à la question posée et au KPI concerné. Par exemple, si l'utilisateur U2 pose la question suivante : « Combien y a-t-il d'utilisateurs dans la flotte mobile ? », la réponse la plus appropriée est textuelle et peut prendre la forme suivante : « Il y a 11500 utilisateurs dans la flotte mobile ». Dans ce cas, le KPI concerné est le KPI « Nombre de collaborateurs » spécifié dans le fichier de gouvernance GVP. Le champ d'informations relatif au type de graphe indique la valeur « faux » pour indiquer qu'aucun type de graphe n'est associé à ce KPI.

En relation avec la FIG. 4, on décrit maintenant une phase de validation de la réponse RSP transmise à l'utilisateur.

Lors d'une étape E11, il est transmis à l'utilisateur via l'agent conversationnel CBT une requête de validation de la réponse RSP qu'il a reçue. Par exemple, cette requête prend la forme d'une question du type : « Etes-vous satisfait de cette réponse ? ». Il peut être proposé à l'utilisateur de répondre par oui ou non, un pouce levé ou baissé, ou encore une note entre 1 et 5 par exemple. Si la réponse est non, un pouce baissé ou si elle comprend une note inférieure à un seuil donné, par exemple égal à 4, il est décidé en E12 que l'utilisateur n'a pas validé la réponse.

Dans ce cas, selon un ou plusieurs modes de réalisation, il lui est demandé de valider les premiers mots clés KW1 extraits en E2. Par exemple, l'agent conversationnel CBT génère l'interaction suivante : « voici les mots clés extraits de votre question : [premiers mots clés]. Est-ce qu'ils correspondent à vos attentes ? ». Si l'utilisateur répond oui en E14, un rapport d'erreur LOG est émis en E15 et stocké en mémoire et/ou transmis à un module distant ou à un analyste via une interface utilisateur. En effet, dans ce cas, on peut considérer que l'interaction avec l'agent conversationnel CBT s'est déroulée de façon satisfaisante, et que de ce fait, le problème provient des opérations suivantes relatives à l'interrogation de la base de données DWH.

Lorsqu'au contraire, l'utilisateur ne valide pas les premiers mots clés extraits en E12, alors il est demandé en E16 à l'utilisateur de fournir les mots clés KW3 qu'il aurait souhaités. Une fois obtenus, ces mots clés obtenus sont exploités en exécutant une nouvelle itération du procédé, à partir de l'étape E3 (transcription).

En cas de validation de la réponse RSP par l'utilisateur, les premiers mots clés KW1 sont comparés aux deuxièmes mots clés stockés en mémoire, par exemple dans le fichier de gouvernance GVP, et il est identifié en E17 si un ou plusieurs de ces premiers mots clés ne correspondent pas aux deuxièmes mots clés. Le cas échéant, les deuxièmes mots clés KW2 stockés en mémoire, par exemple dans le fichier de gouvernance GVP, en association avec le KPI, sont complétés en ajoutant le ou les premiers mots clés identifiés, ce qui permet une mise à jour au fil de l'eau des paramètres opérationnels du fichier de gouvernance GVP. Par exemple, cette mise à jour du fichier de gouvernance GVP est réalisée par l'agent de mise à jour UPD de la plateforme PTF représenté sur la FIG. 1, sur réception d'une commande ou notification du dispositif 100.

Selon un ou plusieurs modes de réalisation, le fichier informatique de gouvernance GP est généré automatiquement, par exemple par l'agent ordonnanceur de tâches SCD de la plateforme PTF représenté sur la FIG. 1. Le fichier de gouvernance GVP doit spécifier un emplacement des fichiers de code informatique, par exemple programmés en langage de type SQL (en anglais, « Structured Query Language »), permettant d'exploiter la base de données DWH et en particulier ceux des différents schémas de données qui constituent la structure de la base de données. Ces fichiers sont relatifs à une initialisation du schéma et des tables de la base de données et à une extraction de données en lien avec les indicateurs clés de performance KPIs contenus dans un ou plusieurs tableaux de bord.

En l'absence de spécification, les autres paramètres relatifs à l'extraction de mots clés, l'outil d'intelligence artificielle générative IAG ou l'évaluation de la distance entre deux mots clés, sont mis à des valeurs par défaut.

Lors de la spécification du fichier SQL en charge d'initialiser la base de données DWH, un sous-module de décodage (non représenté sur la FIG. 1) des informations (en anglais, « parsing ») du module ETL s'occupe d'extraire des données source les données en lien avec les schémas de base de données et de les positionner dans le fichier de gouvernance GVP au niveau de la section intitulée « schémas ».

Lorsque de la spécification des fichiers SQL en charge d'extraire les données de la base de données en vue d'alimenter les différents indicateurs visuels représentatifs des indicateurs clés de performance KPIs d'un tableau de bord, le sous-module de décodage des informations s'occupe d'extraire les données en lien avec l'extraction des données et de les positionner dans le fichier de gouvernance GVP au niveau de la section intitulée «BI » et ce pour chaque indicateur clé de performance KPI. Ainsi, le titre de fichier SQL sert de titre au KPI concerné, un premier champ d'informations sert à spécifier le chemin d'accès au fichier SQL permettant de construire un indicateur visuel du KPI, un deuxième champ d'informations sert à spécifier une requête « query » à utiliser pour obtenir les informations relatives à ce KPI, un troisième champ d'informations sert à spécifier les mots clés associés au KPI et un quatrième champ d'informations sert à spécifier le type de graphe utilisé, le cas échéant. Lorsque le KPI n'est pas adapté à une représentation graphique, le type de graphe est renseigné à la valeur « faux » (en anglais, « false »).

Chaque fonction, bloc, étape décrit peut être mis en oeuvre dans du matériel, des logiciels, des microprogrammes, des intergiciels, des microcodes ou toute combinaison appropriée de ceux-ci. S'ils sont mis en oeuvre dans un logiciel, les fonctions ou blocs des schémas fonctionnels et des organigrammes peuvent être mis en oeuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en oeuvre les fonctions décrites dans la présente description.

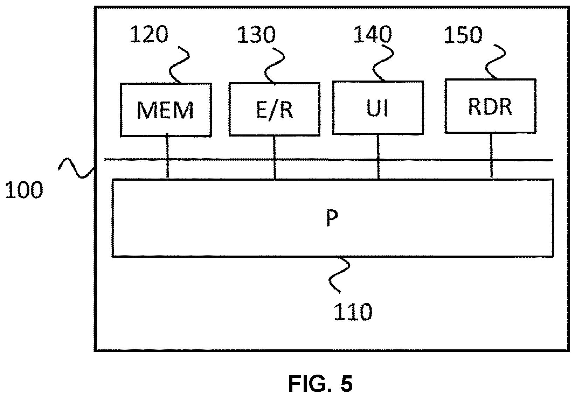

La FIG. 5 illustre un exemple de structure matérielle d'un dispositif 100 d'accès à des informations contenues dans des tables de données selon un ou plusieurs modes de réalisation. Dans cet exemple, le dispositif 100 est configuré pour mettre en oeuvre toutes les étapes du procédé décrit dans le présent document. En variante, il pourrait aussi mettre en oeuvre une partie seulement de ces étapes.

En relation avec la FIG. 5, le dispositif 100 comprend au moins un processeur 110 et au moins une mémoire 120. Le dispositif 100 peut aussi comprendre une ou plusieurs interfaces de communication. Dans cet exemple, le dispositif 100 comprend des interfaces réseau 130 (par exemple, des interfaces réseau pour l'accès à un réseau câblé / sans fil, y compris une interface Ethernet, une interface WIFI, etc.) connectées au processeur 110 et configurées pour communiquer via un ou plusieurs liens de communication câblés / non câblés et des interfaces utilisateur 140 (par exemple, un clavier, une souris, un écran d'affichage, etc.) connectées au processeur. Le dispositif 100 peut également comprendre un ou plusieurs lecteurs de support 150 pour lire un support de stockage lisible par ordinateur (par exemple, un disque de stockage numérique (CD-ROM, DVD, Blue Ray, etc.), une clé USB, etc.). Le processeur 110 est connecté à chacun des autres composants précités afin d'en commander le fonctionnement.

La mémoire 120 peut comprendre une mémoire vive (RAM), une mémoire cache, une mémoire non volatile, une mémoire de sauvegarde (par exemple, des mémoires programmables ou flash), une mémoire morte (ROM), un disque dur (HDD), un lecteur à état solide (SSD) ou toute combinaison de ceux-ci. La ROM de la mémoire 120 peut être configurée pour stocker, entre autres, un système d'exploitation du dispositif 100 et/ou un ou plusieurs codes de programmes informatiques d'une ou plusieurs applications logicielles. La RAM de la mémoire 120 peut être utilisée par le processeur 110 pour le stockage temporaire de données.

Le processeur 110 peut être configuré pour stocker, lire, charger, exécuter et/ou traiter autrement des instructions stockées dans un support de stockage lisible par ordinateur et/ou dans la mémoire 120 de sorte que, lorsque les instructions sont exécutées par le processeur, le dispositif 100 exécute une ou plusieurs ou toutes les étapes du procédé de gestion, décrit dans le présent document. Des moyens mettant en oeuvre une fonction ou un ensemble de fonctions peuvent correspondre dans ce document à un composant logiciel, à un composant matériel ou bien à une combinaison de composants matériels et/ou logiciels, apte à mettre en oeuvre la fonction ou l'ensemble de fonctions, selon ce qui est décrit ci-dessous pour les moyens concernés.

La présente description concerne aussi un support d'informations lisible par un processeur de données, et comportant des instructions d'un programme tel que mentionné ci-dessus.

Le support d'informations peut être n'importe quel moyen matériel, entité ou appareil, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

Un mode de réalisation concerne également un produit programme d'ordinateur comprenant un support de stockage lisible par ordinateur sur lequel sont stockées des instructions de programme, les instructions de programme étant configurées pour causer la mise en oeuvre par le dispositif hôte (par exemple un ordinateur) de tout ou partie des étapes du procédé décrit ici lorsque les instructions de programme sont exécutées par un ou plusieurs processeurs et/ou un ou plusieurs composants matériels programmables du dispositif hôte.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les modes de réalisations qui viennent d'être présentés, ainsi que leurs variantes, présentent chacun de nombreux avantages

Les système, dispositif et procédé qui viennent d'être décrits permettent aux utilisateurs d'accéder plus facilement et plus rapidement des informations d'aide à la décision, sans avoir à consulter un tableau de bord produit par un outil d'aide à la prise de décision à partir d'informations stockées dans des tables de données, mais via de simples interactions avec un agent conversationnel configuré pour leur restituer l'information souhaitée telle qu'elle est présentée dans le tableau de bord.

Ils permettent aussi une mise à jour dynamique du système grâce à la mise à jour d'un fichier informatique de gouvernance créé pour spécifier des outils, tels que des logiciels ou applications ou algorithmes, et/ou des paramètres que le système doit utiliser pour fonctionner. Ainsi, les changements de versions d'un logiciel, ajouts d'une table de données, nouveau KPI, etc. sont répercutés dans le système, sans nécessité d'en modifier le code source applicatif. Un autre avantage est un gain de temps considérable et une réactivité accrue.

Les système, dispositif et procédé qui viennent d'être décrits permettent également une amélioration continue du service rendu, grâce à la prise en compte des retours d'expérience des utilisateurs, par exemple en ajoutant de nouveaux mots clés dans le fichier de gouvernance ou en remontant des alertes vers les équipements de développement informatiques.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

**Revendications**

1. Procédé mis en oeuvre par ordinateur de gestion d'accès à des tables de données (TB1, TB2, ...TBN) stockées dans un entrepôt de données (DWH), comportant les étapes, mises en oeuvre par un système informatique (PTF), de :

   - recevoir (E1), via un agent conversationnel (CBT), une question relative à des informations contenues dans une ou plusieurs desdites tables de données;
   - extraire (E2) un ou des premiers mots clés (KW1) de ladite question ;
   - en cas de correspondance (E5) d'au moins undit premier mot clé avec au moins un deuxième mot clé (KW2) stocké en mémoire en association avec un indicateur de performance (KPI), obtention (E6) d'une requête de recherche (REQ dans au moins une table de données, ladite requête de recherche étant associée dans ladite mémoire avec ledit indicateur de performance ;

   - exécuter (E7) la requête de recherche dans la au moins une table de données et obtenir (E8) des résultats (RST) de recherche;
   - générer (E10) via l'agent conversationnel une réponse (RSP) à la question au moins à partir des informations contenues dans les résultats (RST) de recherche.

2. Procédé selon la revendication 1, comprenant en outre les étapes de comparer (E4) le ou lesdits premiers mots clés avec des deuxièmes mots clés stockés dans ladite mémoire et de décider (E5) de la correspondance en fonction d'une distance déterminée entre ledit au moins un premier mot clé et ledit au moins un deuxième mot clé.

3. Procédé selon la revendication 1, comprenant en outre l'étape d'obtenir (E9) des informations relatives à un type de représentation graphique associé audit indicateur de performance (KPI), la réponse à la question étant générée (E11) en prenant en compte lesdites informations obtenues.

4. Procédé selon l'une des revendications 1 à 3, comportant une étape de lire (E0) un fichier informatique de gouvernance (GVP), stocké en mémoire (MEM), décrivant la ou les tables de données et des paramètres opérationnels de contrôle d'opérations exécutées lors de la mise en oeuvre desdites étapes.

5. Procédé selon la revendication précédente, dans lequel le fichier informatique de gouvernance (GVP), stocké en mémoire (MEM), décrit en outre un ou plusieurs indicateurs de performance et stocke le ou les deuxièmes mots clés et la requête de recherche en association avec undit indicateur de performance.

6. Procédé selon l'une quelconque des revendications précédentes, comprenant les étapes de :

   - obtenir (E11) via l'agent conversationnel une validation ou invalidation de la réponse générée et,
   - en cas de rejet (E12), obtenir (E13) via l'agent conversationnel une validation ou une invalidation du ou des premiers mots clés,
   - en cas de validation du ou des premiers mots clés, mettre à disposition (E15) un rapport d'erreur (LOG).

7. Procédé selon la revendication 6, dans lequel, en cas d'invalidation du ou des premiers mots clés, le procédé comprend l'étape d' :

   - obtenir (E16) un ou des troisièmes mots-clés via l'agent conversationnel et exécuter une nouvelle itération des étapes du procédé.

**8.** Procédé selon la revendication 5, dans lequel le procédé comprend, en cas de validation (E12) de la réponse, l'étape (E18) de mise à jour des deuxièmes mots clés stockés en mémoire, par ajout des premiers mots clés extraits de la question qui ne correspondent pas (E17) à des deuxièmes mots clés déjà stockés en mémoire.

**9.** Procédé selon l'une des revendications précédentes, ledit procédé comprenant une étape (E3) de transcrire, via un agent d'intelligence artificielle générative (IAG), le ou les premiers mots clés (KW1) extraits de la question (QU), qui sont relatifs à une information temporelle, comprenant des dates ou périodes temporelles conformes à un format donné, avant d'exécuter l'étape (E6) d'obtenir la requête de recherche.

**10.** Dispositif de gestion d'un accès à des documents électroniques, comprenant des moyens, mis en oeuvre par ordinateur, pour :

- recevoir, via un agent conversationnel (CBT), une question relative à des informations contenues dans une ou plusieurs desdites tables de données;
- extraire un ou des premiers mots clés (KW1) de ladite question ;
- en cas de correspondance d'au moins undit premier mot clé avec au moins un deuxième mot clé (KW2) stocké en mémoire en association avec un indicateur de performance (KPI), obtenir une requête de recherche (REQ dans au moins une table de données, ladite requête de recherche étant associée dans ladite mémoire avec ledit indicateur de performance ;
- exécuter la requête de recherche dans la au moins une table de données et obtenir (E8) des résultats (RST) de recherche;
- générer via l'agent conversationnel une réponse (RSP) à la question au moins à partir des informations contenues dans les résultats (RST) de recherche.

**11.** Dispositif (100) selon la revendication précédente, comprenant :

- au moins un processeur ; et
- au moins une mémoire comprenant un code de programme informatique, la au moins une mémoire et le code de programme informatique étant configurés pour, avec l'au moins un processeur, provoquer l'exécution dudit dispositif.

**12.** Système informatique (PTF) de gestion de tables de données comprenant :

- le dispositif (100) selon l'une des revendications 10 et 11,
- un entrepôt de données (DWH) comprenant lesdites table de données ;
- une mémoire (MEM) comprenant un fichier informatique de gouvernance (GVP) décrivant les tables de données (TB1,... TBN) et des paramètres opérationnels de contrôle d'opérations exécutées par ledit dispositif,
- un processeur sur lequel un agent conversationnel (CBT) est installé.

**13.** Programme d'ordinateur comportant des instructions qui lorsqu'elles sont exécutées par un processeur mettent en oeuvre le procédé selon l'une quelconque des revendications 1 à 9.

**14.** Support d'enregistrement non volatile et lisible par un ordinateur, sur lequel est enregistré le programme d'ordinateur selon la revendication précédente.

**FIG.1**

GVP

```
kind: GovernanceLayout
spec:
  schemas:
    path: "dwh.sql"
    - DWH
    - ODS

  tables:
    path: "dwh.sql"
    - ABONNEMENT            DT1
    - calcul_indicateur     DT2
    - FLOTTE_MOBILE          DT3
    - FORFAIT          DT4
    - SOCIETE          DT5
    - TELEPHONE              DT6
    - UTILISATEUR_ALL              DT7


  bi:
    KPI:
      "Répartition des appareils":
        path: "repartition_appareils.sql"
        query: "SELECT device_type, COUNT(*) as device_count FROM TELEPHONE GROUP BY device_type;"
        keywords: ["répartition", "appareils", "diagramme camembert"]
        graph_type: "diagramme camembert"

      "Evolution consommation data":
        path: "evolution_conso_data.sql"
        query: "SELECT date_column, data_consumption FROM FORFAIT ORDER BY date_column;"
        keywords: ["évolution", "consommation", "données", "data"]
        graph_type: "diagramme en ligne"

      "Nombre de collaborateurs":
        path: "nombre_collaborateurs.sql"
        query: "SELECT COUNT(lastname) AS count FROM UTILISATEUR_ALL;"
        keywords: ["nombre", "collaborateurs", "collaboratrices"]
        graph_type: faux

      ...
  keyword_extraction:
    algorithm: BERT
    n_keywords: 5

  IAG:
    model: "LLama 2"

  TextDistance:
    model: "Jaccard index"
    threshold: 0.4
    widgets_weight: 0.6
    keywords_weight: 0.4
```

**FIG.2**

**FIG. 3**

**FIG. 4**

120 130 140 150

| MEM | E/R | UI | RDR |

100

P

110

**FIG. 5**

EP 4 557 118 A1

Europäisches
Patentamt

European
Patent Office

Office européen
des brevets

# RAPPORT DE RECHERCHE EUROPEENNE

Numéro de la demande

EP 23 30 6988

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/251111 A1 (TEMKIN CHARLIE [US] ET AL) 6 août 2020 (2020-08-06) <br> * figures 1,3,20A,20G,21,27 * <br> * alinéas [0019], [0060], [0065], [0110], [0162] – [0175] * <br> * revendications 1,9,10 * <br> ----- | 1-14 | INV. <br> G06F16/242 |
| | | | DOMAINES TECHNIQUES RECHERCHES (IPC) |
| | | | G06F |

Le présent rapport a été établi pour toutes les revendications

| Lieu de la recherche | Date d'achèvement de la recherche | Examinateur |
|---|---|---|
| Munich | 29 avril 2024 | Michalski, Stéphane |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

........................................................................
& : membre de la même famille, document correspondant

EPO FORM 1503 03.82 (P04C02)

**EP 4 557 118 A1**

## ANNEXE AU RAPPORT DE RECHERCHE EUROPEENNE
## RELATIF A LA DEMANDE DE BREVET EUROPEEN NO.

**EP 23 30 6988**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**29-04-2024**

| Document brevet cité<br>au rapport de recherche | Date de<br>publication | Membre(s) de la<br>famille de brevet(s) | Date de<br>publication |
|---|---|---|---|
| US 2020251111 A1 | 06-08-2020 | AUCUN | |

Pour tout renseignement concernant cette annexe : voir Journal Officiel de l'Office européen des brevets, No.12/82

EPO FORM P0460